# EUROPÄISCHE PATENTSCHRIFT

(11) **EP 3 713 022 B1**
(45) Veröffentlichungstag und Bekanntmachung des Hinweises auf die Patenterteilung: **05.01.2022**
(21) Anmeldenummer: 20163490.4
(22) Anmeldetag: 17.03.2020
(51) Int. Cl.: H01T 4/06

(54) **ÜBERSPANNUNGSSCHUTZGERÄT**
ELECTRICAL SURGE PROTECTION ELEMENT
APPAREIL DE PROTECTION CONTRE LA SURTENSION

(30) Priorität: 18.03.2019 DE 102019106737; 18.03.2019 DE 102019008133
(43) Veröffentlichungstag der Anmeldung: 23.09.2020
(73) Patentinhaber: DEHN SE + Co KG, 92318 Neumarkt / Opf. (DE)
(72) Erfinder: Strangfeld, Uwe, 92318 Neumarkt (DE); Hierl, Stephan, 92318 Neumarkt (DE); Leibig, Bernd, 92318 Neumarkt (DE); Spangler, Patrick, 92318 Neumarkt (DE); Zimmermann, Michael, 66399 Mandelbachtal (DE)
(74) Vertreter: Prinz & Partner mbB

(56) Entgegenhaltungen:
- DE-U1-202004 011 908
- DE-U1-202018 100 941
- DE-U1-202018 105 277
- Montageanleitung: "Einspeiseadapter (ESA) für Sammelschienen", , 30. Juni 2017 (2017-06-30), Seiten 1-4, XP055717438, Gefunden im Internet: URL:https://www.hager.de/files/download/0/ 13896775_1/0/6LE002163C.PDF [gefunden am 2020-07-23]

## Beschreibung

Die Erfindung betrifft ein Überspannungsschutzgerät auf Funkenstreckenbasis zur werkzeugfreien, aufrastbaren Installation an einer Sammelschienenanordnung gemäß Oberbegriff des Patentanspruches 1. Ein solches Gerät ist in DE 20 2018 100941 U1 offenbart.

Aufgrund in Kraft getretener Normen wird die Installation von Smart-Meter-Gateways (SMG) zur intelligenten Erfassung von Verbraucherdaten für Endkunden von Energieversorgungsunternehmen verpflichtend. Da die Daten sowie das SMG im Besitz des Energieversorgungsunternehmens sind, muss die Spannungsversorgung für das SMG durch das Energieversorgungsunternehmen im Vorzählerbereich (UAR) abgegriffen werden. Um im Fehlerfall das SMG bzw. die zuführenden Leitungen zu schützen, müssen diese separat abgesichert werden. Alle namhaften Hersteller von Niederspannungsschutzkomponenten bieten hierzu bereits Lösungsansätze in Form von dezidierten Leitungsschutzschaltern, Schmelzsicherungen oder Feinsicherungen an. Diese müssen jedoch zusätzlich separat installiert werden und schränken somit die bereits knappen Platzverhältnisse weiter ein.

Um einer Elektrofachkraft die Installation auf einem typischen 40mm-Schienensystem, welches z.B. in Deutschland für den unteren Anschlussraum des Zählerschranks vorgeschrieben ist, weiter zu erleichtern, bieten Hersteller nun außer den herkömmlichen Sammelschienenklemmen komfortablere Einspeiseadapter (ESA) (z.B. Hager K96ESA5) an. Da der Platz im unteren Anschlussraum nicht größer wird, jedoch immer mehr Geräte in diesem Installationsumfeld verbaut werden sollen, gestaltet sich die Montage und Verdrahtung der so erforderlichen Komponenten für den Installateur in der Praxis als äußerst schwierig.

Im Lichte der obigen Ausführungen ist es Aufgabe der vorliegenden Erfindung, eine Spannungsversorgung für Zähler- und Messvorrichtungen im Vorzählerbereich bereitzustellen, die platzsparend und einfach zu installieren ist und auch einen Überspannungsschutz sicherstellt.

Die Aufgabe wird durch ein Überspannungsschutzgerät gemäß Anspruch 1 gelöst. Vorteilhafte Ausgestaltungen ergeben sich aus den Unteransprüchen.

Ein Kerngedanke der vorliegenden Erfindung besteht darin, den für die Spannungsversorgung einer externen Vorrichtung, insbesondere eines SMGs, benötigten Spannungsabgriff in das Überspannungsschutzgerät zu integrieren, das ohnehin im Vorzählerbereich benötigt wird. Somit wird keine separate Komponente für die Spannungsversorgung benötigt, wodurch Platz im Vorzählerbereich eingespart werden kann. Gleichzeitig kann mit dem Überspannungsschutzgerät auch ein Überspannungsschutz für das SMG bereitgestellt werden, so dass hierfür keine weitere, separate Komponente erforderlich wird.

Insgesamt ist mit dem erfindungsgemäßen Überspannungsschutzgerät eine platzsparende und einfach zu installierende Lösung für die Spannungsversorgung des SMG geschaffen, mit der zudem gleichzeitig ein Überspannungsschutz für das SMG bereitgestellt werden kann.

Die Erfindung betrifft demnach ein Überspannungsschutzgerät auf Funkenstreckenbasis zur werkzeugfreien, aufrastbaren Installation an einer an sich bekannten Sammelschienenanordnung. Das Überspannungsschutzgerät weist ein Gehäuse mit einem Kupplungsbereich zum mechanischen und elektrischen Kontaktieren an der Sammelschienenanordnung, Überspannungsableiter zum Schutz von Niederspannungs-Versorgungssystemen gemäß den Mindestanforderungen nach DIN VDE 011-534, die mittels Elementen des Kupplungsbereiches, ausgebildet als Federkontakte, mit der Sammelschienenanordnung elektrisch verbindbar sind, auf. Weiterhin besitzt das Überspannungsschutzgerät mindestens einen überstromgeschützten Spannungsabgriff zur Stromversorgung externer Vorrichtungen, insbesondere diese ausgebildet als externe Mess- oder Regeleinheit. Der Spannungsabgriff ist innerhalb des Gehäuses mit den entsprechenden Federkontakten oder den jeweiligen Überspannungsableitern elektrisch verbunden.

Der Überstromschutz ist als eine im Gehäuse integrierte, von außen zugängliche, auswechselbare Sicherung ausgebildet.

Das Gehäuse besitzt erfindungsgemäß zusätzlich einen einseitigen Rücksprung oder eine einseitige Einbuchtung für einen, auf der Sammelschienenanordnung unmittelbar benachbart aufsteckbaren oder aufschiebbaren Einspeiseadapter.

Die Überspannungsableiter für das Überspannungsschutzgerät sind bevorzugt als Kombiableiter für TT- und TN-S-Systeme zum Einsatz in Hauptstromversorgungssystemen bei Wohngebäuden ohne äußerem Blitzschutz, auch mit Freileitungseinspeisung, realisiert. Die überstromgeschützte Spannungsversorgung dient allgemein für Zusatzanwendungen nach VDE-AR-N 4100.

Die Sicherung ist bevorzugt als Sicherungseinsatz mit einem Bemessungsstrom von 6,3 A realisierbar.

Am Gehäuse des Überspannungsschutzgerätes ist ein PE bzw. Erdanschlussport vorhanden.

Die Federkontakte und der Kupplungsbereich sind so ausgeführt, dass eine Montage des Überspannungsschutzgerätes auf typischen 40 mm-Sammelschienensystemen erfolgen kann.

Die Gehäuseform des Überspannungsschutzgerätes ist bevorzugt langgestreckt und rechteckig.

An einer Gehäuseschmalseite ist der mindestens eine Spannungsabgriff ausgebildet.

In der Nähe dieses Spannungsabgriffes befindet sich die von außen zugängliche, auswechselbare Sicherung.

An einer Gehäuselängsseite ist der einseitige Rücksprung oder die Einbuchtung für die benachbarte Anordnung des Einspeiseadapters vorhanden.

Die Erfindung wird im Folgenden auch hinsichtlich weiterer Merkmale und Vorteile anhand eines Ausführungsbeispiels beschrieben, das anhand der Figuren näher erläutert wird. Hierbei zeigen:
- Fig. 1: eine perspektivische Ansicht eines erfindungsgemäßen Überspannungsschutzgeräts;
- Fig. 2: eine weitere perspektivische Ansicht des Überspannungsschutzgeräts aus Fig. 1;
- Fig. 3: eine Ansicht des Überspannungsschutzgeräts aus Fig. 1 mit einem angrenzend angeordneten Einspeiseadapter;
- Fig. 4: ein schematisches Schaltbild, in dem der Anschluss eines Spannungsabgriffs im Überspannungsschutzgerät illustriert ist;
- Fig. 5: eine typische Darstellung einer Einbausituation der Anordnung nach Fig. 3; und
- Fig. 6: ein Prinzipschaltbild des Überspannungsschutzgerätes gemäß der Erfindung.

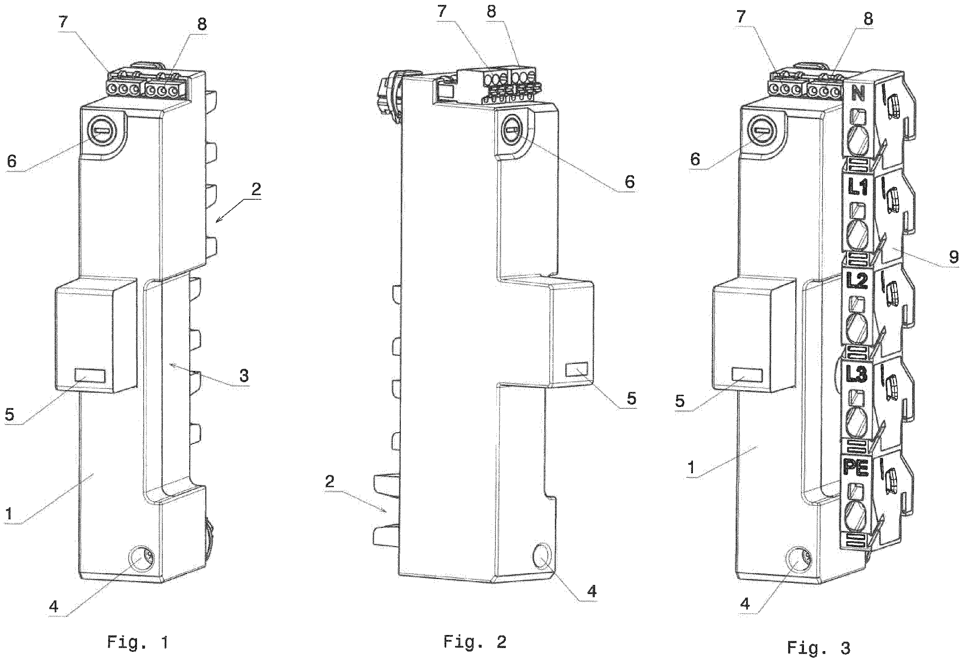

Fig. 1 zeigt eine perspektivische Ansicht eines Ausführungsbeispiels eines Überspannungsschutzgeräts gemäß der vorliegenden Erfindung. Das Überspannungsschutzgerät weist ein Gehäuse 1 auf, an dessen Rückseite ein Kupplungsbereich 2 zur mechanischen und elektrischen Kontaktierung einer Sammelschiene angeordnet ist. Der Kupplungsbereich 2 weist Kupplungsmittel auf, die in einem Rasterabstand eines Sammelschienensystems angeordnet sind und in bekannter Weise eine unmittelbare Montage auf einem Sammelschienensystem zur mechanischen und elektrischen Verbindung mit den Leiterschienen ermöglichen. Hierfür sind nicht dargestellte Federkontakte ausgebildet.

Die Kupplungsmittel sind beispielsweise so ausgebildet, dass sie ein unmittelbares mechanisches Verrasten des Überspannungsschutzgeräts auf das Sammelschienensystem ermöglichen und dabei gleichzeitig eine elektrische Kontaktierung der Leiterschienen herstellen, wie dies beispielsweise in der DE 20 2004 011 908 U1 beschrieben ist.

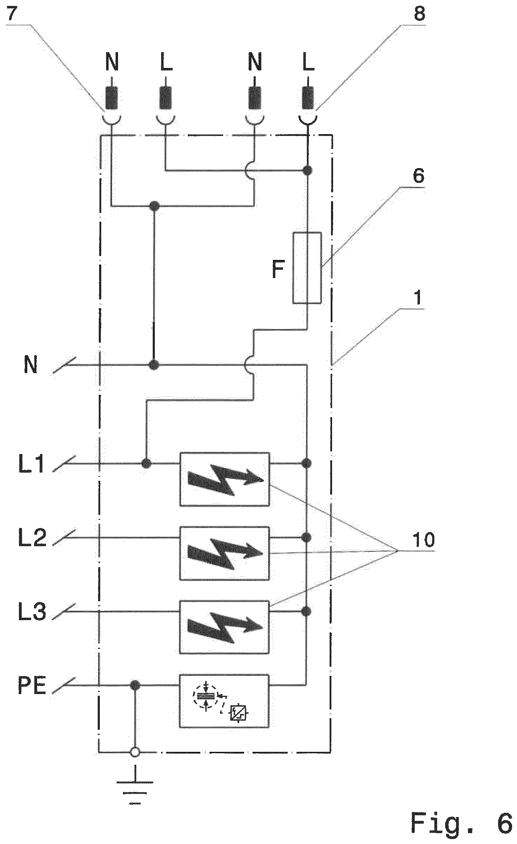

Im Inneren des Gehäuses 1 sind mehrere elektrisch verdrahtete Überspannungsableiter, insbesondere Funkenstrecken 10, befindlich (siehe Figur 6). Das Überspannungsschutzgerät gemäß den Figuren geht von einer Konfiguration eines Kombi-Ableiters mit mehreren integrierten und elektrisch verdrahteten Überspannungsableitern aus. Derartige unter dem Markennamen "DEHNventil ZP" vertriebenen Kombi-Ableiter sind speziell für ein Sammelschienen-Anschlussfeld eines Zählerplatzes ausgelegt.

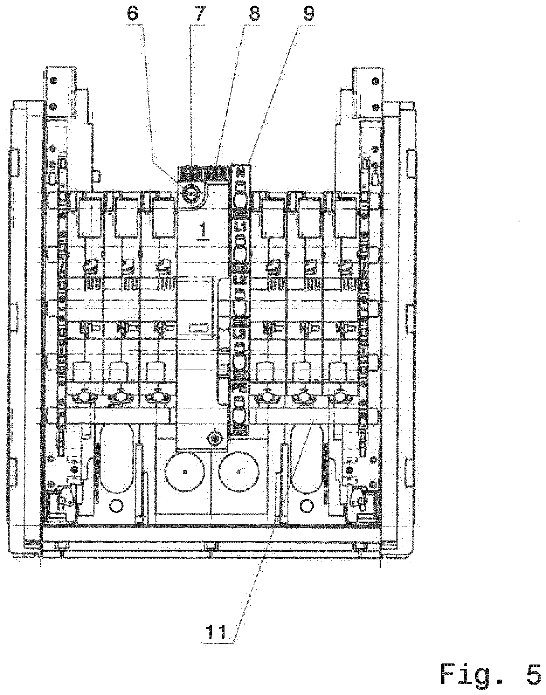

Neben der bekannten Funktion des Schutzes von Niederspannungsversorgungssystemen stellt das Überspannungsschutzgerät zudem eine Stromversorgung für eine externe Vorrichtung, insbesondere eine externe Mess- oder Regeleinheit wie ein SMG bereit. Wie in Fig. 1 zu sehen ist, weist das Überspannungsschutzgerät zu diesem Zweck an dem Gehäuse 1 einen Stromanschluss bzw. Spannungsabgriff 7; 8 auf, der jeweils einen Anschluss der externen Vorrichtung ermöglicht. Der Spannungsabgriff ist über den Kupplungsbereich 2 mit Federkontakten ebenso wie die Überspannungsableiter 10 mit dem Sammelschienensystem 11 (siehe Figur 5) elektrisch und mechanisch koppelbar und ermöglicht so einen direkten Spannungsabgriff vor dem mit dem Überspannungsschutzgerät zu schützenden Niederspannungsversorgungssystem. Zur einfachen Verbindung mit der externen Vorrichtung ist der Spannungsabgriff über den Stromanschluss 7; 8 an die schmälere Außenseite des Gehäuses 1 geführt, so dass nach der Installation des Überspannungsschutzgeräts die externe Vorrichtung direkt angeschlossen werden kann.

Um einen entsprechenden Schutz für die externe Vorrichtung bereitstellen zu können, weist der Spannungsabgriff 7; 8 einen Überstromschutz auf, der in dem vorliegenden Ausführungsbeispiel durch eine Sicherung 6 gebildet ist, die an dem Gehäuse 1 zugänglich ist und ausgewechselt werden kann, ohne das Überspannungsschutzgerät zu demontieren.

Das Überspannungsschutzgerät weist weiterhin eine Statusanzeige 5 zur optischen Anzeige eines Überspannungsereignisses, sowie einen PE-Anschluss 4 auf. An einer Seitenwand des Gehäuses 1 weist das Überspannungsschutzgerät eine Aussparung 3 auf, die es erlaubt das Überspannungsschutzgerät und eine zugeordnete Einspeiseschiene für das zu schützende Niederspannungsversorgungssystem raumsparend und eng benachbart unabhängig voneinander montieren und demontieren zu können. Das Überspannungsschutzgerät kann ferner einen Fernmeldeanschluss aufweisen.

Fig. 2 zeigt eine weitere perspektivische Ansicht des Überspannungsschutzgeräts aus Fig. 1. Die Anschlüsse 7 und 8 weisen hier Stecker mit einer PUSH-IN-Anschlusstechnik auf, die ein schnelles Anschließen externer Vorrichtungen ermöglichen.

Fig. 3 zeigt das Überspannungsschutzgerät aus Fig. 1 mit einer angrenzend angeordneten Einspeiseschiene bzw. einen Einspeiseadapter 9, die teilweise in die Aussparung 3 des Gehäuses 1 ragt, wie bei einer typischen Einbausituation in einem Zählerschrank vorgesehen (siehe Figur 5).

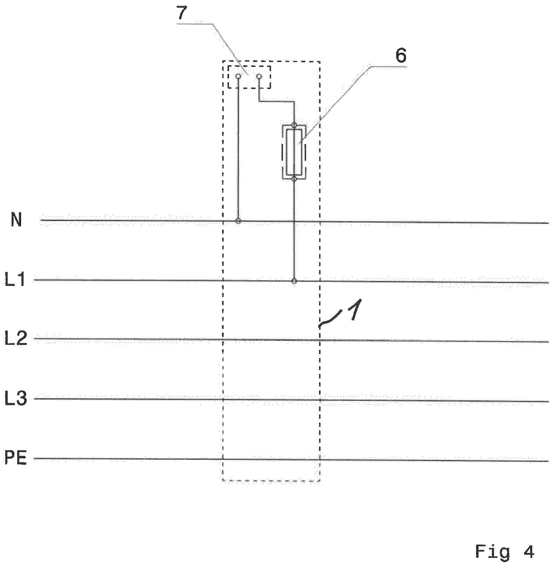

Fig. 4 stellt ein schematisches Schaltbild dar, in dem der Anschluss eines Spannungsabgriffs 7 im Überspannungsschutzgerät 1 illustriert ist. Der Spannungsabgriff weist die Sicherung 6 als Überstromschutz auf und ist in dem Überspannungsschutzgerät so mit dem Kupplungsbereich 2 bzw. den jeweiligen Überspannungsableitern verbunden, dass er im montierten Zustand des Überspannungsschutzgeräts die N-Schiene und die L1-Schiene kontaktiert, um einen Spannungsabgriff von diesen Schienen bereitzustellen. Es wäre ebenso möglich, das Überspannungsschutzgerät so zu konfigurieren, dass der Spannungsabgriff von anderen Stromschienen erfolgt.

Die Figur 6 zeigt ein Prinzipschaltbild des Überspannungssschutzgerätes gemäß der Erfindung. Das Gehäuse ist hier wiederum mit dem Bezugszeichen 1 angedeutet. Innerhalb des Gehäuses befinden sich für L1 bis L3, welche Phasenleitungen darstellen, entsprechend elektrisch verdrahtete Funkenstrecken 10. Ebenso ist die elektrische Verdrahtung zwischen den dargestellten Spannungsabgriffen 7 und 8 erkennbar.

Die integrierte Sicherung 6 und deren Verschaltung ist ebenfalls ersichtlich.

### Bezugszeichenliste:

- 1: Gehäuse
- 2: Kupplungsbereich
- 3: Aussparung
- 4: PE-Anschluss
- 5: Statusanzeige
- 6: Sicherung
- 7: Spannungsabgriff
- 8: Spannungsabgriff
- 9: Einspeiseadapter
- 10: Funkenstrecke
- 11: Sammelschiene

## Patentansprüche

1. Überspannungsschutzgerät auf Funkenstreckenbasis zur werkzeugfreien, aufrastbaren Installation an einer Sammelschienenanordnung (11), aufweisend ein Gehäuse (1) mit einem Kupplungsbereich (2) zum mechanischen und elektrischen Kontaktieren an der Sammelschienenanordnung (11), Überspannungsableitern (10) zum Schutz von Niederspannungs-Versorgungssystemen gemäß den Mindestanforderungen nach DIN VDE 011-534, die mittels Elementen des Kupplungsbereichs (2), ausgebildet als Federkontakte, mit der Sammelschienenanordnung (11) elektrisch verbindbar sind, **dadurch gekennzeichnet, dass** das Überspannungsschutzgerät mindestens einen überstromgeschützten Spannungsabgriff (7; 8) zur Stromversorgung externer Vorrichtungen, insbesondere einer externen Mess- oder Regeleinheit, aufweist, wobei der Spannungsabgriff (7; 8) innerhalb des Gehäuses (1) mit den Federkontakten oder den Überspannungsableitern (10) elektrisch verbunden ist, der Überstromschutz als eine an dem Gehäuse (1) integrierte, von außen zugängliche, auswechselbare Sicherung (6) ausgebildet ist, und das Gehäuse (1) einen einseitigen Rücksprung oder einseitige Einbuchtung (3) für einen auf der Sammelschienenanordnung (11) unmittelbar benachbart aufsteckbaren Einspeiseadapter (9) besitzt.

2. Überspannungsschutzgerät nach Anspruch 1,
**dadurch gekennzeichnet, dass**
der mindestens eine Spannungsabgriff (7; 8) an einer Gehäuseschmalseite und der Rücksprung oder die Einbuchtung (3) an einer Gehäuselängsseite eines langgestreckten im Wesentlichen rechteckigen Gehäuses vorgesehen ist.

3. Überspannungsschutzgerät nach Anspruch 1 oder 2,
**dadurch gekennzeichnet, dass**
der einseitige Rücksprung oder die einseitige Einbuchtung (3) Abmessungen besitzt, die der vollständigen Aufnahme eines vom Einspeiseadapter abstehenden oder wegweisenden Vorsprunges dienen.

4. Überspannungsschutzgerät nach Anspruch 3,
**dadurch gekennzeichnet, dass**
die Ausbildung des Rücksprungs oder der Einbuchtung so vorgenommen ist, dass ein Entfernen des Überspannungsschutzgerätes einerseits sowie des Einspeiseadapters (9) andererseits von der Sammelschienenanordnung (11) unabhängig voneinander erfolgen kann.

## Claims

1. A spark gap-based surge protection device for tool-free, snap-on installation on a busbar arrangement (11), including a housing (1) having a coupling area (2) for mechanically and electrically contacting the busbar arrangement (11), surge arresters (10) for protecting low-voltage supply systems in accordance with the minimum requirements according to DIN VDE 011-534, which are adapted to be electrically connected to the busbar arrangement (11) by means of elements of the coupling area (2), configured as spring contacts, **characterized in that** the surge protection device includes at least one overcurrent-protected voltage tap (7; 8) for supplying power to external devices, in particular an external measuring or control unit, wherein the voltage tap (7; 8) is electrically connected, inside the housing (1), to the spring contacts or the surge arresters (10), the overcurrent protector is formed as a replaceable fuse (6) that is integrated at the housing (1) and accessible from the outside, and the housing (1) has a recess or indentation (3) on one side for a feed adapter (9) that is adapted to be plugged on the busbar arrangement (11) immediately adjacently.

2. The surge protection device according to claim 1,
**characterized in that**
the at least one voltage tap (7; 8) is provided on a housing narrow side and the recess or indentation (3) is provided on a housing longitudinal side of an elongated, substantially rectangular housing.

3. The surge protection device according to claim 1 or 2,
**characterized in that**
the recess or indentation (3) provided on one side has dimensions that serve to fully accommodate a projection protruding from or facing away from the feed adapter.

4. The surge protection device according to claim 3,
**characterized in that**
the configuration of the recess or indentation is performed such that a removal of the surge protection device, on the one hand, and of the feed adapter (9), on the other hand, from the busbar arrangement (11) can be effected independently of each other.

## Revendications

1. Appareil de protection contre les surtensions sur la base d'un éclateur pour l'installation sur un agencement de barre collectrice (11) sans outil et par enclenchement, présentant un boîtier (1) qui comprend une zone de couplage (2) pour l'établissement d'un contact mécanique et électrique avec l'agencement de barre collectrice (11), des parasurtenseurs (10) pour la protection de systèmes d'alimentation basse tension selon les exigences minimales selon DIN VDE 011 - 534, qui sont aptes à être électriquement reliés à l'agencement de barre collectrice (11) par l'intermédiaire d'éléments de la zone de couplage (2) réalisés sous forme de contacts à ressort, **caractérisé en ce que** l'appareil de protection contres les surtensions présente au moins une prise de tension (7 ; 8) protégée contre un courant de surcharge pour l'alimentation électrique de dispositifs externes, en particulier d'une unité de mesure ou de régulation externe, la prise de tension (7 ; 8) étant électriquement reliée aux contacts à ressort ou aux parasurtenseurs (10) à l'intérieur du boîtier (1), la protection contre un courant de surcharge étant réalisée sous forme de fusible (6) remplaçable accessible depuis l'extérieur et intégré sur le boîtier (1), et le boîtier (1) présentant un retrait unilatéral ou un creux unilatéral (3) pour un adaptateur d'alimentation (9) apte à être enfiché de manière directement adjacente sur l'agencement de barre collectrice (11).

2. Appareil de protection contre les surtensions selon la revendication 1, **caractérisé en ce que**
ladite au moins une prise de tension (7 ; 8) est prévue d'un petit côté de boîtier et le retrait ou le creux (3) est prévu d'un grand côté de boîtier d'un boîtier allongé sensiblement rectangulaire.

3. Appareil de protection contre les surtensions selon la revendication 1 ou 2,
**caractérisé en ce que**
le retrait unilatéral ou le creux unilatéral (3) présente des dimensions servant à la réception complète d'un ressaut qui fait saillie ou est détourné de l'adaptateur d'alimentation.

4. Appareil de protection contre les surtensions selon la revendication 3, **caractérisé en ce que**
la réalisation du retrait ou du creux est effectuée de telle sorte qu'un démontage de l'appareil de protection contre les surtensions, d'une part, et un démontage de l'adaptateur d'alimentation (9), d'autre part, de l'agencement de barre collectrice (11) peuvent être réalisés indépendamment l'un de l'autre.
